# EUROPÄISCHE PATENTSCHRIFT

(11) **EP 2 433 025 B1**
(45) Veröffentlichungstag und Bekanntmachung des Hinweises auf die Patenterteilung: **27.11.2013**
(21) Anmeldenummer: 10718187.7
(22) Anmeldetag: 10.05.2010
(51) Int. Cl.: F16D 65/14, F16D 65/66

(54) **REIBUNGSBREMSE**
FRICTION BRAKE
FREIN À FRICTION

(30) Priorität: 19.05.2009 AT 7852009
(43) Veröffentlichungstag der Anmeldung: 28.03.2012
(73) Patentinhaber: VE Vienna Engineering Forschungs- und Entwicklungs GmbH, 1190 Wien (AT)
(72) Erfinder: PUTZ, Michael, A-2301 Groß Enzersdorf (AT); AUER, Daniel, A-9990 Nussdorf-Debant (AT)
(74) Vertreter: Weiss, Christian
(86) Internationale Anmeldenummer: PCT/EP2010/056327
(87) Internationale Veröffentlichungsnummer: WO 2010/133463

(56) Entgegenhaltungen:
- DE-A1-102007 017 246

## Beschreibung

Die gegenständliche Erfindung betrifft eine Reibungsbremse mit einem Bremsenteil, vorzugsweise ein Bremssattel, an dem eine Andrückeinrichtung zum Andrücken eines Reibbelages gegen eine Reibfläche, vorzugsweise eine Bremsscheibe, angeordnet ist.

Für die sinnvolle Auslegung einer elektrisch betätigten Bremse, wie z.B. einer Scheibenbremse eines Fahrzeugs, sind die tatsächlichen Kräfte und Energien zur Betätigung und Verschleißnachstellung interessant. Die reine Verschleißnachstellung erfolgt langsam über die Bremsbelagslebensdauer und dient dazu, ein gewisses Lüftspiel zwischen Bremsscheibe und Bremsbelag (in der Regel unter einem mm) bei fortschreitendem Verschleiß der Bremsbeläge (Reibbeläge) aufrecht zu erhalten, bzw. nicht zu groß werden zu lassen. Im Bremsfall muss auch das Lüftspiel überwunden werden, wobei das Andrücken des Lüftspiels wesentlich unter einer Sekunde erfolgen soll, weil sonst die Reaktionszeit der Bremse zu lange wird und die Sicherheit gefährdet wäre. Man kann sehr grob davon ausgehen, dass das Lüftspiel in ca. 1/10 sec überwunden werden muss. Die benötigten Kräfte für das Andrücken des Lüftspiels bei PKW liegen grob im Bereich mehrerer 10 N. Diese Kräfte schwanken sehr stark mit Zustand (Schmutz, Korrosion, Alter, etc.), Größe und Bauweise der Bremse. Bei einem angenommen Lüftspiel von 1 mm und einer Anstellkraft von 100 N ist eine Arbeit von 0,1 Ws nötig, wofür in 1/10 sec 1 W benötigt wird. Für die bei einer Vollbremsung benötigte große Anpresskraft von Bremsbelag an Bremsscheibe kann man beim PKW mit einigen 10 kN rechnen. Die notwendigen Wege zur Anstellung ergeben sich durch das elastische Verhalten in Bremsbelägen, Bremssattel und allen anderen hochbelasteten Teilen der Bremse und liegen in der Regel bei ca. einigen 1/10 mm. Bei einer Vollbremsung mit z.B. 40 kN Maximalkraft (angenommen 20 kN mittlerer Kraft) und 0,5 mm wären daher 10 Ws Arbeit für das Andrücken der Bremsbeläge nötig, bei Betätigung der Bremse in 1/2 sec also 20 W im Mittel für Vollbremsung eines Rades. Die benötigten Betätigungsenergien und Leistungen von Fahrzeugbremsen sind daher gering, überhaupt wenn man an normale Bremsungen denkt statt an obige Vollbremsung, aber die dazu benötigten Kräfte sind sehr hoch. Es liegt daher nahe, einen Betätigungsantrieb mit geringer Leistung und dafür für die Erzeugung der benötigten hohen Kräfte einen sehr reibungsarmen Mechanismus zu verwenden. Ein solcher Mechanismus geht z.B. aus der DE 37 16 202 A1 hervor, bei der ein Bremsbelag auf einem Halteteil angeordnet ist, der mittels einer angetriebenen Nocke angestellt oder gelöst wird. Zwischen Halteteil und Nocke ist ein Zwischenteil angeordnet, an dem die Nocke anliegt und der in einer Führung geführt ist. Mit diesem Zwischenteil werden die zufolge Reibung auftretenden Mitnahmekräfte des Bremsbelags aufgenommen und es wird folglich der Bremsbelag am Mitdrehen mit der Bremsscheibe gehindert. Damit ist Selbstverstärkung bei dieser Bremse unmöglich und es muss immer die gesamte Andrückkraft vom Andrückmechanismus aufgebracht werden. Darüber hinaus benötigt eine solche Bremse einen großen Bauraum, womit diese nur bedingt einsetzbar ist. Eine solche Bremse kommt daher vornehmlich als LKW-Bremse zum Einsatz, wo der notwendige Bauraum vorhanden ist.

Solche kraftübersetzte Anpressmechanismen für Scheibenbremsen sind folglich z.B. aus LKW Druckluftbremsen bekannt. Die Druckluft hat aber nur grob 1/10 des Druckes einer Hydraulikbremse, wie z.B. bei PKWs. Weil bei LKW die Kolbenflächen und der Bremsscheibendurchmesser größer sind, kann die Anpresskraft des Bremsbelages mit einer zusätzlichen mechanischen Übersetzung aber trotzdem erreicht werden, weshalb eine Druckluftbremse bei LKWs Anwendung findet. Bei herkömmlichen hydraulischen Scheibenbremsen liegt überall gleicher Druck an und damit gleiche Anpresskraft. Weil keine Selbstverstärkung entsteht, sind die Reibkraft und das Bremsmoment überall gleich. Damit sind bei solchen hydraulischen Bremsen ausgezeichnete Voraussetzungen für gleichmäßiges Bremsen gegeben, was auch mit ein Grund ist, warum in heutigen Fahrzeugen immer noch hydraulische Bremsen eingebaut sind. Eigentlich versucht man bei der Druckluftbremse eine hydraulische Scheibenbremse nachzubauen, treibt aber den Bremsbelag weder mit Druckluft (zu wenig Druck) noch mit Hydraulik sondern mit der Übersetzungsnocke.

Die für eine Bremsung benötigten hohen Kräfte können nicht ohne weiteres durch einen einfachen Hebel unter Ausnutzung der Hebelübersetzung erzeugt werden, da die Übersetzungsverhältnisse aufgrund der beschränkten Kräfte des Betätigungsantriebs so ungünstig werden würden, dass ein solcher Hebel, vor allem aufgrund der engen Platzverhältnisse im Bereich der Räder eines Fahrzeugs, konstruktiv nicht umgesetzt werden könnte. Hierbei würde insbesondere die Anordnung der benötigten Lager für einen solchen Hebel große Probleme bereiten, sodass ein einfacher Hebel in der Praxis nicht verwendbar ist. Ein Beispiel dafür ist die DE 103 24 424 A1, die eine Bremse zeigt, die zum Bremsen einen Stützhebel gegen eine Bremsscheibe drückt. Die mögliche Kraftübersetzung ist dabei durch den verfügbaren Einbauplatz für die Bremse und den notwendigen Lagerungen für den Stützhebel aber beschränkt. Damit müsste ein kraftvoller Antrieb vorgesehen sein, der aber in der Praxis für den Einsatz in einem Fahrzeug ungünstig ist, oder die Bremse muss, so wie in der DE 103 24 424 A1, einen beträchtlichen Teil der Bremskräfte durch Selbstverstärkung aufbringen.

Mit hoch selbstverstärkenden Bremsen sind aber immer die Gefahren ungleicher Selbstverstärkung und des unlösbaren Blockierens der Bremse verbunden, vor allem wenn die entstehende Reibung höher ausfällt als erwartet. Je höher die Selbstverstärkung einer Bremse wird, desto stärker ist erstens die Abhängigkeit des Bremsmoments vom Reibbeiwert und zweitens ist hohe Selbstverstärkung immer an einen Winkel gebunden, der durch den Reibbeiwert festgelegt ist. Damit reagiert die hoch selbstverstärkende Bremse sehr sensibel auf die genaue Winkeleinstellung, was die Regelung einer solchen Bremse schwierig und aufwendig macht. Selbstverstärkung ist daher auch immer ein Problem für die Ermittlung des tatsächlichen Bremsmomentes. In bekannten Bremsen mit Selbstverstärkung, wie z.B. in der DE 103 24 424 A1 oder der DE 101 56 348 C1, die eine elektrisch betätigte Bremse zeigt, muss daher ein entsprechend hoher Aufwand getrieben werden, um ein Blockieren zu verhindern bzw. um das Maß der Selbstverstärkung einstellen zu können. So sind in der DE 101 56 348 C1 z.B. für die Regelung der Selbstverstärkung zwei Antriebe vorgesehen, die gegeneinander arbeiten, was den Regelungsaufwand entsprechend erhöht.

Aus der gattungsbildenden DE 10 2007 017 246 A1 geht eine Bremse mit einem drehbar gelagerten Kraftübertragungselement, das Rampen aufweist, die mit einem Belagträger in Eingriff stehen. Durch Verschwenken des Kraftübertragungselements mittels eines elektromotorischen Aktuators wird das Kraftübertragungselement um seine Drehachse verschwenkt, wodurch die Rampe den Belagträger in Form einer Nockensteuerung einerseits in Drehrichtung der Bremsscheibe verschiebt und andererseits den Belagträger mit Bremsbelag an die Bremsscheibe drückt. Durch den Eingriff zwischen Kraftübertragungselement und Belagträger kommt es bei dieser Bremse auch zwangsweise zu einer Selbstverstärkung, mit den damit verbundenen oben angeführten Problemen.

Es ist daher eine Aufgabe der gegenständlichen Erfindung eine Reibungsbremse anzugeben, die bei sehr kompakter Bauweise die für eine Bremsung benötigten hohen Kräfte, ohne notwendigen Selbstverstärkungsanteil, durch einen Betätigungsantrieb geringer Betätigungsenergie in sehr kurzer Zeit und sehr reibungsarm aufbringen kann.

Diese Aufgabe wird erfindungsgemäße dadurch gelöst, dass an der Andrückeinrichtung ein Halteteil, an dem der Reibbelag anliegt, und ein Betätigungsteil vorgesehen ist, der Betätigungsteil an einem Bremsenteil drehbar gelagert angeordnet ist und am Betätigungsteil ein Betätigungsmittel zum Verschwenken des Betätigungsteils angelenkt ist und im Halteteil ein Zapfen drehbar gelagert angeordnet ist und der Zapfen am Betätigungsteil angeordnet ist, wobei die Drehachse des Zapfens exzentrisch zur Drehachse des Betätigungsteils angeordnet ist. Durch diese Anordnung wird es möglich, sehr hohe Kraftübersetzungen auf sehr kleinem Raum zu realisieren, was wiederum ermöglicht, einen Betätigungsantrieb geringer Energie zu verwenden. Dadurch und durch die besonders kompakte Bauweise lassen sich aber auch sehr kleine Hübe verwirklichen, was sehr kurze Reaktionszeiten der Reibungsbremse ermöglicht.

Um trotzdem Selbstverstärkung als nützlichen Effekt zuzulassen, kann bei der Ausführung mit exzentrischen Drehachsen von Betätigungsteil und Zapfen vorgesehen sein, dass der Reibbelag starr am Halteteil befestigt ist, womit Selbstverstärkung ermöglicht wird. Die Selbstverstärkung wird bei der erfindungsgemäßen Reibungsbremse aber nicht als Grundprinzip genutzt, sondern nur fallweise als nützlicher Effekt in Kauf genommen. Die Erzeugung der benötigten Bremskräfte beruht nicht alleine auf Selbstverstärkung, sondern wird vorrangig von einem Andrückmechanismus aufgebracht. Selbstverstärkung der Bremse wird aber erfindungsgemäß trotzdem ermöglicht und kann ein angenehmer, sich einstellender und die Bremsung unterstützender Nebeneffekt sein, z.B. weil beim PKW bei Vollbremsungen durch dynamische Radlastverteilung sehr viel Bremskraft vorne benötigt wird.

Besonders vorteilhaft ist als Betätigungsteil ein Wellenstück vorgesehen, an dessen axialem Ende der Zapfen angeordnet ist, da ein solches Wellenstück sehr einfach und mittels Standard-Bauteilen, wie z.B. Wälzlager, drehbar gelagert werden kann.

Ebenso vorteilhaft ist als Betätigungsteil eine Hohlwelle vorgesehen, wobei die durchgehende axiale Ausnehmung exzentrisch zur Drehachse der Hohlwelle angeordnet ist und der Zapfen in die Ausnehmung gesteckt ist, da damit einerseits wiederum sehr einfach die Lagerung realisiert werden kann und andererseits auch die notwendige Exzentrizität sehr einfach gefertigt werden kann. Als weitere vorteilhafte Ausgestaltung kann der Betätigungsteil als eine Hohlwelle ausgeführt sein, wobei die durchgehende axiale Ausnehmung mit einem nicht-kreisrunden Querschnitt ausgeführt ist und der Zapfen in die Ausnehmung gesteckt ist. Eine solche Ausnehmung kann einfach gefertigt werden und ermöglicht es, die Bremse in beide Richtungen gleichwirkend betreiben zu können.

Wenn die Drehachse des Zapfens in einer Ausgangsposition so angeordnet ist, dass durch die sich dadurch einstellende Exzentrizität in Abstand und Winkel zur Drehachse des Betätigungsteils zu Beginn der Andrückbewegung des Bremsbelages eine Selbstschwächung und am Ende der Andrückbewegung eine Selbstverstärkung eintritt, kann ein Verlauf der Andrückkraft (und damit der Bremswirkung) über die Andrückbewegung eingestellt werden und dieser optimal gestaltet werden, z.B. auch in Abhängigkeit von der Betätigungseinheit.

Um die benötigte hohe Andrückkraft auf einfachem Weg erzeugen zu können, ist am Betätigungsteil bevorzugt ein Hebelteil angeordnet, an dem das Betätigungsmittel angreift, womit eine sehr hohe Hebelübersetzung realisierbar ist.

Für den laufenden Betrieb der Reibungsbremse ist es vorteilhaft, wenn am beweglichen Bremsenteil eine Verschleißnachstelleinrichtung vorgesehen ist und die Andrückeinrichtung an der Verschleißnachstelleinrichtung angeordnet ist. Auf diese Weise kann fortschreitender Verschleiß einfach und sicher ausgeglichen werden, ohne die Funktion der Bremse zu beeinträchtigen. Besonders vorteilhaft wird an der Verschleißnachstelleinrichtung ein Verschleißnachstellantrieb angeordnet, der eine Gewindespindel antreibt, auf der eine Gewindehülse angeordnet ist, die in einem Verschleißnachstellteil angeordnet ist, wobei die Andrückeinrichtung am Verschleißnachstellteil angeordnet ist. Die selbstsperrende Wirkung einer Gewindespindel kann hier sehr einfach ausgenutzt werden, um im Falle einer Bremsung die dabei auftretenden hohen Andrückkräfte auf die Bremsscheibe übertragen zu können.

Um die Reibung und damit den Verschleiß zu reduzieren kann an der Verschleißnachstelleinrichtung vorteilhaft eine Lüftspielwiederherstellungseinrichtung vorgesehen sein, die nach einer Bremsung ein Lüftspiel wiederherstellt. Damit kann sichergestellt werden, dass der Bremsbelag nach einer Bremsung vollständig von der Reibfläche abhebt. Dazu wird besonders vorteilhaft am beweglichen Teil der Verschleißnachstelleinrichtung, vorzugsweise dem Verschleißnachstellteil, eine Ausnehmung vorgesehen, in der ein Stift angeordnet wird und dieser Stift durch eine Feder gegen einen ortsfesten Teil der Scheibenbremse, vorzugsweise dem Radlagerteil, federbelastet ist, wobei der Stift in der Ausnehmung mit seitlichem Spiel eingebaut ist. Damit kann mit einer konstruktiv einfachen Anordnung sichergestellt werden, dass ein Lüftspiel nach einer Bremsung wiederhergestellt wird.

Bei oftmaligem oder langem Bremsen kann es passieren, dass sich die Bremse stark erhitzt, was eine Wärmeausdehnung der Bremsenteile bewirkt, was wiederum dazu führen kann, dass der Bremsbelag nach einer Bremsung nicht vollständig von der Reibfläche abhebt und Andrückkräfte bestehen bleiben. Das führt zu erhöhtem Verschleiß und kann bis zum Blockieren der Bremse gehen. Um das zu vermeiden, kann die Andrückeinrichtung kann mit einer Wegreserve ausgeführt sein, um den Halteteil über eine Grundstellung hinaus zurückzuziehen. Alternativ kann die Verschleißnachstelleinrichtung mit einer Leistungsreserve ausgeführt sein, um die nach einer Bremsung verbleibenden Andrückkräfte zu überwinden.

Die erfindungsgemäße Reibungsbremse wird vorzugsweise von einer Steuereinheit angesteuert, die über eine Verkabelung mit einem an einem Teil der Reibungsbremse angeordneten Sensor verbunden ist und von diesem Messwerte erhält und die Messwerte zu einem Steuersignal verarbeitet, wobei die Steuereinheit über eine Verkabelung mit der Verschleißnachstelleinrichtung und/oder der Andrückeinrichtung verbunden ist. Damit kann gewährleistet werden, dass die Reibungsbremse in allen Betriebssituationen optimal angesteuert bzw. betätigt wird, was die Sicherheit der Bremse, bzw. des Fahrzeugs in dem die Bremse eingebaut ist, erhöht.

Für eine Vereinfachung der Sensorik kann vorgesehen sein, aus den gemessenen Messwerten in der Steuereinheit weitere Werte zu ermitteln und zu einem Steuersignal zu verarbeiten. Damit können Sensoren eingespart werden und benötigte Werte mit hinreichender Genauigkeit mittels verfügbaren Formeln, Modellen, etc. ermittelt werden.

Um die Betriebssicherheit der Reibungsbremse auf einfache Weise weiter zu erhöhen, kann vorgesehen sein, in der Steuereinheit die Einsatzfähigkeit der Reibungsbremse durch Messung von elektrischen Größen oder durch Vergleiche von Messwerten oder durch Vergleich von Messwerten zu gespeicherten Werten zu überwachen.

Die Steuereinheit kann auch genutzt werden, um zur Erhöhung der Betriebssicherheit auch noch in einem Fehlerfall eine Bremsung zu ermöglichen, wenn diese für eine Bremsung nur die Verschleißnachstelleinrichtung oder nur die Andrückeinrichtung ansteuert. Ebenfalls kann zur weiteren Erhöhung der Betriebssicherheit vorgesehen sein, eine Verkabelung, einen Sensor, einen Aktuator, eine Steuereinheit, eine Elektrikeinheit und/oder eine Elektronikeinheit der Reibungsbremse redundant anzuordnen.

Die Steuereinheit kann auf einfache Weise programmiert sein, um die Verschleißnachstelleinrichtung und/oder die Andrückeinrichtung zur Realisierung einer Parkbremsfunktion oder einer Anfahrhilfe anzusteuern.

Um die negativen Effekte der Bremsenhysterese zu eliminieren bzw. zu reduzieren wird vorzugsweise vorgesehen, dass die Steuereinheit für die gewünschten Betätigungs- oder Anstellvorgänge eine Wegvorgabe an die Verschleißnachstelleinrichtung und/oder die Andrückeinrichtung ermittelt und der Verschleißnachstelleinrichtung und/oder die Andrückeinrichtung das Steuersignal der Wegvorgabe sendet. Es kann aber auch für die Reibungsbremse die Bremsenhysterese in der Steuereinheit gespeichert sein, was es der Steuereinheit ermöglicht, die Bremsenhysterese bei der Erzeugung eines Steuersignals an die Verschleißnachstelleinrichtung und/oder die Andrückeinrichtung zu kompensieren.

Wenn beidseitig der Reibfläche ein Reibbelag angeordnet ist und beidseitig eine Andrückeinrichtung vorgesehen ist, werden die Andrückbewegungen vorteilhaft kleiner, weil sie jeweils nur noch einen Reibbelag andrücken müssen. Das kann zu besseren Reaktionszeiten der Reibungsbremse führen oder Optimierungen in der Übersetzung der Andrückung zulassen.

Ganz besonders vorteilhaft kann die erfindungsgemäße Reibungsbremse auch als Reibkupplung verwendet werden, da vom grundsätzlichen Aufbau zwischen Reibbremse und Reibkupplung kein Unterschied besteht.

Die gegenständliche Erfindung wird anhand der beispielhaften, vorteilhafte Ausgestaltungen zeigende und nicht einschränkende Figuren 1 bis 9 näher erläutert. Dabei zeigt
Fig. 1 eine perspektivische Ansicht der erfindungsgemäßen Reibungsbremse, hier als Scheibenbremse ausgeführt,
Fig. 2 eine Detailansicht der Andrückeinrichtung der erfindungsgemäßen Bremse, hier wieder als Scheibenbremse ausgeführt,
Fig. 3 eine Detailansicht einer weiteren Ausgestaltung der erfindungsgemäßen Bremse,
hier wieder als Scheibenbremse ausgeführt,
Fig. 4 eine weitere Ausgestaltung einer Andrückeinrichtung einer Bremse,
Figs. 5 und 6 eine schematische Darstellung der Scheibenbremse mit einer Einrichtung zur Wiederherstellung eines Lüftspiels vor und nach einer Bremsung,
Fig. 7 eine schematische Darstellung des Einflusses der Exzentrizität auf die Selbstverstärkung,
Figs. 8 und 9 Verwendungen der erfindungsgemäßen Reibungsbremse als Reibkupplungen.

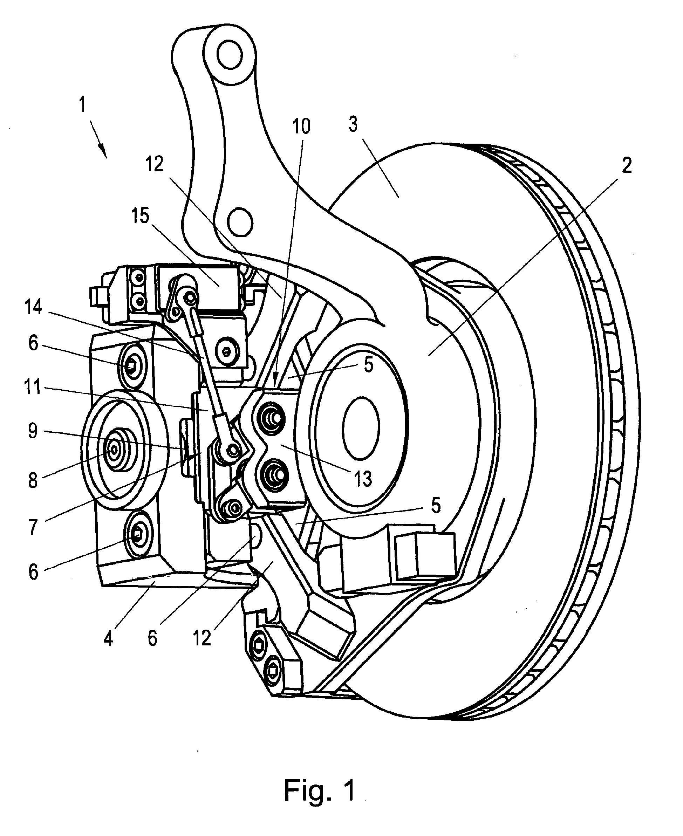

In Fig. 1 ist eine erfindungsgemäße Reibungsbremse 1, z.B. wie hier eine Scheibenbremse für ein Rad eines Fahrzeuges, dargestellt. Es werden die folgenden Ausführungen anhand einer Scheibenbremse gemacht. Da bei Reibungsbremsen prinzipiell immer die Aufgaben Verschleißnachstellung und Überwinden des Lüftspiels, Aufbringung hoher Belagsandrückkräfte und gegebenenfalls Selbstverstärkung sowie reibungsarme Betätigung vorliegen, eignet sich das Verfahren gleichermaßen auch für anderer Reibungsbremsen wie Mehrscheibenbremsen (Lamellenbremsen), bei denen die erste und letzte Scheibe im Paket aneinandergedrückt werden, und für Backenbremsen, bei denen die (meist) zwei Backen außen oder innen gegen eine Bremstrommel gedrückt werden. Allen Reibungsbremsen ist dabei gemein, dass ein Reibbelag (hier eben ein Bremsbelag) mittels einer Andrückeinrichtung gegen eine Reibfläche (Scheibe oder Trommel) gedrückt wird.

Am Radlagerteil 2 ist das (hier nicht dargestellte) Rad in bekannter Weise drehbar gelagert und die Bremsscheibe 3 in ebenfalls an sich bekannter Art und Weise daran angeordnet. Am Radlagerteil 2 ist hier auch der bewegliche Teil der Bremse beweglich angeordnet, hier als Bremssattel 4 ausgeführt. Der Bremssattel 4 kann aber auch an einem anderen feststehenden Teil des Fahrzeuges angeordnet sein. Der Bremssattel 4 ist hier als bekannter Schwimmsattel ausgeführt, bei dem der Bremssattel 4 die Bremsscheibe 3 umgreift und beidseitig der Bremsscheibe 3 je ein Reibbelag 5 (hier ein Bremsbelag) angeordnet ist. Der Bremssattel 4 ist hier durch zwei Führungsstangen 6, die am Radlagerteil 2 angeordnet sind, geführt und gehalten. Der Bremssattel 4 kann aber natürlich auch anders als als Schwimmsattel ausgeführt sein und kann auch anders als durch zwei Führungsstangen 6 am Radlagerteil 2 angeordnet sein.

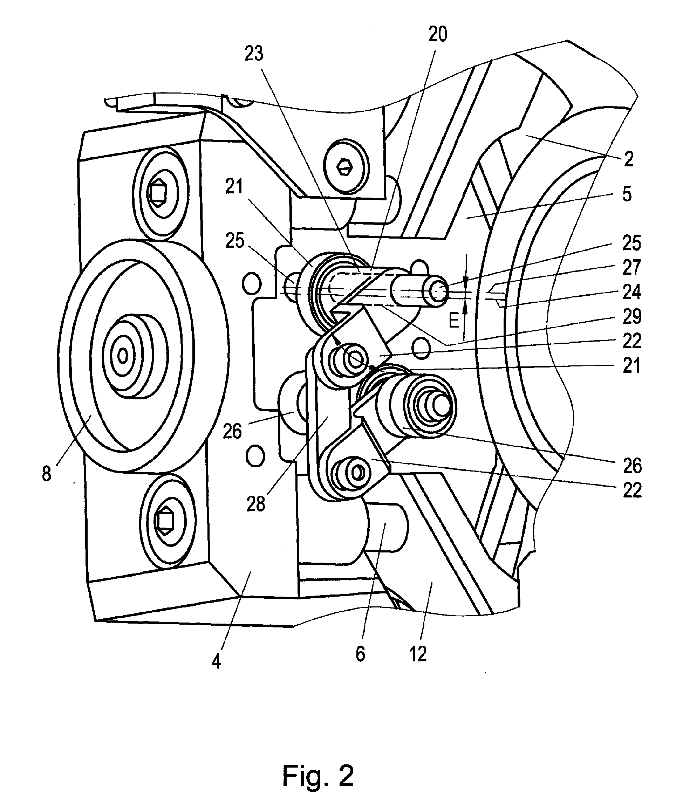

Als beweglicher Teil der Reibungsbremse 1 kann eine Verschleißnachstelleinrichtung 7 vorgesehen sein, an der eine Andrückeinrichtung 10 zum Andrücken des Bremsbelages 5 an die Bremsscheibe 3 angeordnet ist, wie weiter unten unter Bezugnahme auf die Fig. 2 noch genauer beschrieben ist. Die Verschleißnachstelleinrichtung 7 kann, wie im gezeigten Ausführungsbeispiel, am Bremssattel 4 angeordnet sein, könnte aber auch an einem feststehenden Teil der Reibungsbremse 1 angeordnet sein. Die Verschleißnachstelleinrichtung 7 dient dazu, durch den Betrieb der Bremse 1 entstehenden Verschleiß auszugleichen und ein gewünschtes Lüftspiel zwischen Bremsbelag 5 und Bremsscheibe 3 aufrecht zu erhalten. Dazu ist hier im Bremssattel 4 eine Gewindespindel 9 vorgesehen, die von einem Verschleißnachstellmotor 8, z.B. ein einfacher Elektromotor, angetrieben wird. Auf der Gewindespindel 9 ist ein beweglicher Verschleißnachstellteil 11 angeordnet, z.B. über eine zur Gewindespindel 9 passende (in Fig. 1 nicht sichtbare) Gewindehülse 17, der durch Verdrehen der Gewindespindel 9 durch den Verschleißnachstellmotor 8 linear hin- und herbewegt werden kann. Auf diese Weise kann durch Verdrehen der Gewindespindel 9 der Verschleißnachstellteil 11, und damit auch der Bremsbelag 5, zur Aufrechterhaltung eines gewünschten Lüftspiels verschoben werden. Auch bei sehr schlechten Gewindewirkungsgraden ist diese Aufgabe gut mit einem Gewinde bewältigbar, mit dem zusätzlichen Vorteil, dass die Verschleißnachstellung unter Last selbst blockiert, z.B. wenn beim Bremsen zusätzliche Andrückkräfte eingeleitet werden. Die Verschleißnachstelleinrichtung 7 nimmt im gezeigten Ausführungsbeispiel auch zum Teil die beim Bremsen entstehende Reibkraft des Bremsbelages 5 auf und leitet diese Reibkraft über Verschleißnachstellanschläge 12, die am Radlagerteil 2 angeordnet sind, in den Radlagerteil 2 ab, um ein Mitdrehen der Reibungsbremse 1 zu verhindern. Um die Reibungsbremse 1 in beiden Fahrtrichtungen einsetzen zu können, sind sowohl oben als auch unten Verschleißnachstellanschläge 12 vorgesehen.

Zum Betätigen der Reibungsbremse 1, also zum Andrücken des Bremsbelages 5 an die Bremsscheibe 3, dient die Andrückeinrichtung 10. Dazu kann der Bremsbelag 5 starr an einem Halteteil 13 der Andrückeinrichtung 10 befestigt sein und die Andrückeinrichtung 10, wie unten noch ausführlich beschrieben, an einem Teil des Bremssattels 4, hier an der Verschleißnachstelleinrichtung 7, angeordnet. Der Halteteil 13 ist hier U-förmig ausgeführt und umgreift einen Teil der Verschleißnachstelleinrichtung 7, wie z.B. den Verschleißnachstellteil 11, bzw. einen anderen Teil des Bremssattels 4. Die Andrückeinrichtung 10 wird durch ein Betätigungsmittel 14, wie z.B. hier eine Stange, betätigt, wobei das Betätigungsmittel 14 durch einen Betätigungsantrieb 15 angetrieben wird. Der Betätigungsantrieb 15 bringt die Andrückenergie auf, die durch die Andrückeinrichtung 10 mit hoher, reibungsarmer Übersetzung in eine hohe Andrückkraft des Bremsbelages 5 umgesetzt wird. Der Betätigungsantrieb 15 ist z.B. ein Elektromotor, der über einen Hebel das Betätigungsmittel 14 betätigt. Dadurch, dass die Andrückeinrichtung 10 direkt und starr mit dem Halteteil 13 (bzw. dem Bremsbelag 5) verbunden ist, wirken die entstehenden Mitnahmekräfte auch auf die Andrückeinrichtung 10, womit Selbstverstärkung entstehen kann, wie weiter unten noch genauer beschrieben.

Die Fig. 2 zeigt den Andrückmechanismus zum besseren Verständnis im Detail und freigeschnitten, also ohne Halteteil 13, teilweise ohne Lager, ohne Betätigungsmittel 15 und nur mit Teilen der Verschleißnachstelleinrichtung 7. Ein Betätigungsteil 20 ist über Lager 21 in einem Bremsenteil, hier in der Verschleißnachstelleinrichtung 7 oder in einem anderen Teil des Bremssattels 4, drehbar gelagert angeordnet. Der Betätigungsteil 20 ist hier als Wellenstück 23 mit einem daran befestigten Hebelteil 22, der z.B. wie hier an einem axialen Ende des Wellenstückes 23 angeordnet ist, ausgeführt. Am Wellenstück 23 sind die Lager 21 angeordnet. Am Hebelteil 22 greift das Betätigungsmittel 14 an, womit der Betätigungsteil 20 um die Drehachse 24 der Lager 21 verschwenkt werden kann.

Am Betätigungsteil 20 ist an einem axialen Ende ein axialer Zapfen 25 angeordnet, der über Lager 26 im Halteteil 13 der Andrückeinrichtung 10 drehbar gelagert angeordnet ist. Bei U-förmigen Ausführung des Halteteils 13, wie im gezeigten Ausführungsbeispiel, sind bevorzugt beidseitig des Betätigungsteils 20 axiale Zapfen 25 und Lager 26 vorgesehen. Die Drehachse 27 des Zapfens 25 ist jedoch exzentrisch zur Drehachse 24 des Betätigungsteils 20 angeordnet, was in Fig. 2 durch die Exzentrizität E angedeutet ist.

Da der Betätigungsteil 20 in einem Bremsenteil, wie dem Bremssattels 4 oder der Verschleißnachstelleinrichtung 7, angeordnet ist, wird durch Verschwenken des Betätigungsteils 20 der Halteteil 13 durch die Exzentrizität E des Zapfens 25 in Richtung zur Bremsscheibe 3 bzw. von dieser weg bewegt und damit der Bremsbelag 5 angedrückt oder gelöst. Falls der Betätigungsteil 20 an der Verschleißnachstelleinrichtung 7 angeordnet ist, sorgt das selbstsperrende Gewinde der Gewindespindel 9 dafür, dass durch die Andrückeinrichtung 10 eine Andrückkraft auf den Bremsbelag 5 aufgebracht werden kann. Ist die Verschleißnachstelleinrichtung 7 anders als mit Gewindespindel 9 ausgeführt, so ist vorzusehen, dass die Verschleißnachstellung 7 fixiert wird, wenn die Andrückeinrichtung 10 betätigt wird.

Um ein gleichmäßiges Andrücken des Bremsbelags 5 an die Bremsscheibe 3 zu erzielen, können in der Andrückeinrichtung 10 auch zwei oder mehr Betätigungsteile 20 mit Zapfen 25 vorgesehen sein. Ebenso ist es denkbar die Zapfen 25 nur an einer Seite des Betätigungsteils 20 anzuordnen. Im dargestellten Beispiel sind zwei Betätigungsteile 20 vorgesehen, an denen beidseitig jeweils ein Zapfen 25 angeordnet ist, die jeweils über Lager 26 im Halteteil 13 gelagert sind. Die Andrückkräfte werden hier somit vorteilhaft an vier Stellen und damit sehr gleichmäßig in den Bremsbelag 5 geleitet. Die Hebelteile 22 der beiden Betätigungsteile 20 können dabei auch über ein Verbindungsteil 28 zu einem Parallelogramm verbunden werden, um eine erzwungene synchrone Bewegung der beiden Betätigungsteile 20 zu erreichen. Das Betätigungsmittel 14 muss dabei nur an einem der Hebelteile 22 angreifen. Bei mehreren Betätigungsteilen 20 können für die einzelnen Betätigungsteile 20 aber auch unterschiedliche Geometrien, Exzentrizitäten E (Betrag und Winkel) und/oder Längen des Hebelteils 22 verwendet werden, um lokal unterschiedliche Andrückkräfte und Bewegungen zu erzeugen.

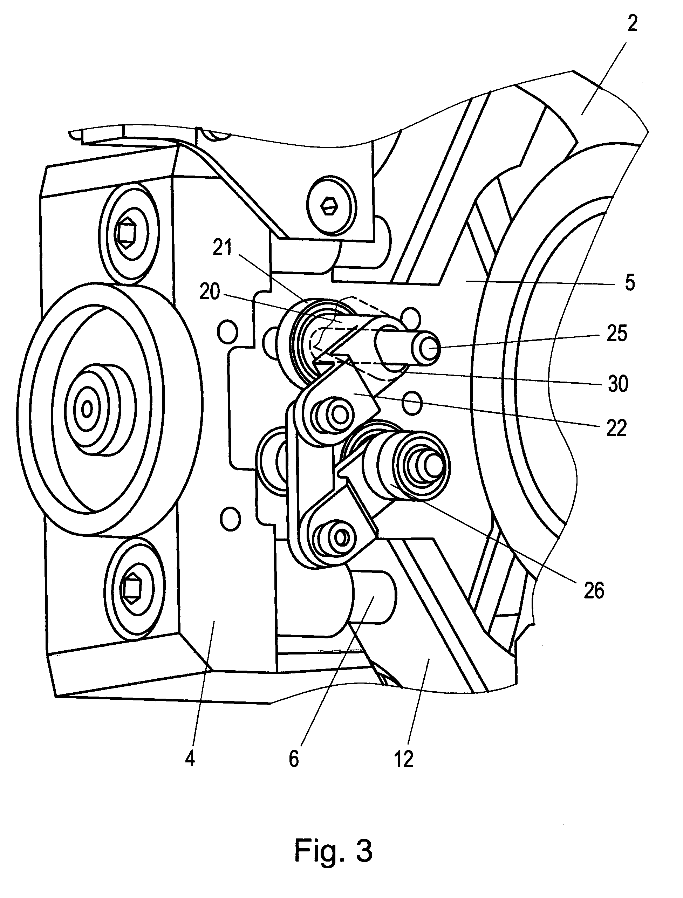

Der oder die Zapfen 25 kann/können am Betätigungsteil 20 starr befestigt sein, z.B. durch Schweißen oder durch einteilige Fertigung des Betätigungsteils 20 mit dem/den Zapfen 25. Alternativ kann das Wellenstück 23 des Betätigungsteils 20 auch als Hohlwelle ausgeführt sein, wobei die axial durchgehende Ausnehmung 29, hier eine kreisrunde Bohrung (durch die strichlierte Linie in Fig. 3 angedeutet), durch das Wellenstück 23 exzentrisch zur Drehachse 24 des Betätigungsteils 20 ausgeführt wird. In diese Bohrung 29 kann nun ein durchgehender Zapfen 25 gesteckt werden, der damit wieder exzentrisch zur Drehachse 24 des Betätigungsteils 20 angeordnet ist.

In Fig. 3 ist eine weitere vorteilhafte Ausgestaltung der erfindungsgemäßen Reibungsbremse 1 dargestellt. In diesem Beispiel ist im Betätigungsteil 20 keine durchgehende exzentrisch angeordnete Bohrung 29 vorgesehen, durch die der Zapfen 25 gesteckt wird, sondern eine durch den Betätigungsteil 20 durchgehende Ausnehmung 30 mit einem nicht-kreisrunden Querschnitt, wie z.B. hier in Form eines Langloches, in das der Zapfen 25 gesteckt wird, wobei sich der Zapfen 25 in der Ausnehmung 30 beweglich angeordnet ist. Der Querschnitt der Ausnehmung 30 kann aber auch andere Formen annehmen wie z.B. elliptisch oder ein gekrümmtes Langloch. Die Exzentrizität E entsteht dabei durch die Querschnittsform der Ausnehmung 30 durch die Beweglichkeit des Zapfens 25 zwischen den Enden der nicht-kreisrunden Ausnehmung 30, wie nachfolgend anhand des Beispiels eines Langloches erläutert wird.

Durch Andrücken des Bremsbelages 5 mit der Andrückeinrichtung 10 wird der Zapfen 25 in der Ausnehmung 30 (hier ein Langloch), je nach Stellung des Betätigungsteils 20 an ein Ende des Langloches 30, das wie ein Anschlag wirkt, gedrückt, womit wieder eine Exzentrizität E zwischen Drehachse 24 des Betätigungsteils 20 und der sich einstellenden Drehachse 27 des Zapfens 25 entsteht. Damit entsteht ein Angriffspunkt der Andrückkraft um die Drehachse 24 des Lagers 21. Diese Andrückkraft wird über den Zapfen 25 und die Lager 26 in den Halteteil 13 und damit in den Bremsbelag 5 eingebracht. Für die umgekehrte Fahrtrichtung kann der Betätigungsteil 20 umgelegt werden, wie in Fig. 3 strichliert angedeutet, wodurch der Zapfen 25 dann am anderen Ende der Ausnehmung 30 gedrückt wird. Die Andrückkräfte für die Bremsung werden dabei wie oben zu Fig. 2 beschrieben erzeugt. Da die hohen Kräfte durch diese Ausführung auf den Bereich der Ausnehmung 30 und den Zapfen 25 beschränkt bleiben, kann das Ende des Hebelteils 22 wie oben zum Antrieb verwendet werden. Damit lässt sich für beide Fahrtrichtungen eine gleichwirkende Bremse, eventuell auch unter Ausnutzung einer sich einstellenden Selbstverstärkung, erzielen.

Selbstverständlich können die oben beschriebenen Lager 21, 26 auch so ausgeführt sein, dass diese nicht den ganzen Kreisumfang des Betätigungsteils 20 oder des Zapfens 25 umfassen, wie z.B. bei Verwendung eines herkömmlichen Kugellagers, sondern nur jenen Umfang, der für die Andrückbewegung notwendig ist. Ebenso könnte auch das Wellenstück 23 des Betätigungsteils 20 oder ein Zapfen 25 keinen kreisrunden Querschnitt aufweisen, sondern z.B. nur einen Kreisausschnitt.

Der Bremsbelag 5 muss aber nicht starr mit dem Halteteil 13 verbunden sein, sondern es ist auch ausreichend, wenn der Bremsbelag 5 am Halteteil 13 nur anliegt. In einer solchen Anordnung kann jedoch keine Selbstverstärkung auftreten, da die auf den Bremsbelag 5 wirkenden Mitnahmekräfte anderweitig aufgenommen werden müssen, z.B. durch die Verschleißnachstellanschläge 12.

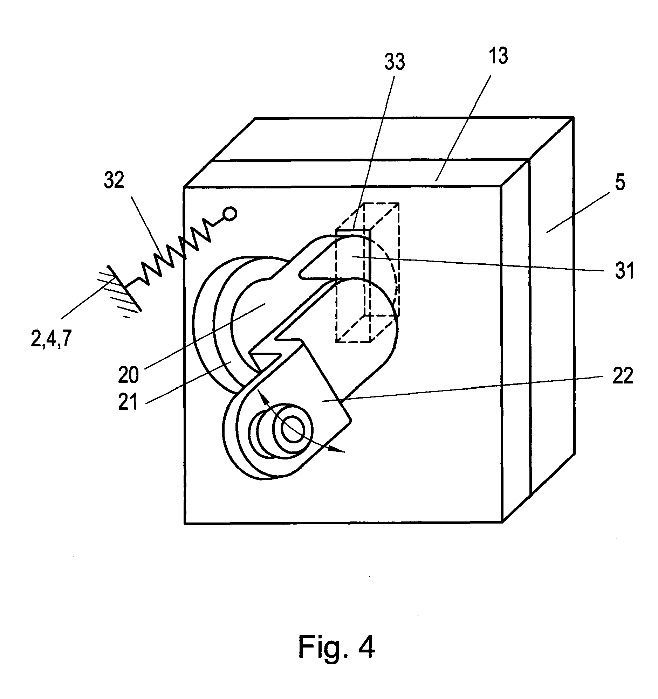

Eine andere Ausgestaltung einer Reibungsbremse 1 mit einer Andrückeinrichtung 10 zur Erzeugung einer hohen Andrückkraft bei kleinem Hub und niedriger Betätigungsenergie ist in Fig. 4 dargestellt. Darin sind zum besseren Verständnis nur der Betätigungsteil 20 und der Halteteilt 13 mit dem Bremsbelag 5 dargestellt, wobei nur ein Betätigungsteil 20 dargestellt ist. Selbstverständlich können, analog zu oben, auch mehrere Betätigungsteile 20 vorgesehen sein, um ein gleichmäßigeres Andrücken zu erreichen. Der Betätigungsteil 20 ist wiederum über ein Lager 21 im beweglichen Teil der Reibungsbremse 1, wie z.B. dem Bremssattel 4 oder der Verschleißnachstelleinrichtung 7, drehbar gelagert angeordnet und kann wieder über ein Hebelteil 22 verschwenkt werden, wie oben bereits ausführlich beschrieben. Am Betätigungsteil 20 ist hier nun eine Nocke 31 angeformt bzw. angeordnet, die am Halteteil 13 anliegt. An einem Betätigungsteil 20 können aber auch mehrere Nocken 31 vorgesehen sein, um ein gleichmäßigeres Andrücken zu erreichen. Wird der Betätigungsteil 20 für eine Bremsung nun verschwenkt, wird der Halteteil 13 gemäß der Erhebungskurve der Nocke 31 in Richtung Bremsscheibe 2 bewegt, wobei durch die Gestaltung der Erhebungskurve der Verlauf der Andrückkraft vorgegeben werden kann. Um die aufgrund der Reibung zwischen Bremsbelag 5 und Bremsscheibe 3 auftretenden Mitnahmekräfte durch die Andrückeinrichtung 10 aufnehmen zu können, was die Voraussetzung für Selbstverstärkung ist, ist am Halteteil 13 ein Anschlag vorgesehen, die mit der/den Nocke(n) 31 zusammenwirkt, um ein Mitnehmen des Bremsbelages 5 durch die entstehenden Mitnahmekräfte zu verhindern. Der Anschlag kann z.B. als Vertiefung 33 am Halteteil 13 ausgeführt sein, in der die Nocke 31 angreift. Ebenso ist auch eine Erhebung am Halteteil 13 denkbar, die mit der Nocke 31 zum Verhindern des Mitdrehens zusammenwirkt.

Um den Halteteil 13 mit dem Bremsbelag 5 nach der Bremsung wieder von der Bremsscheibe 2 abzuheben, kann am Halteteil 13 ein Ende einer Feder 32 angeordnet sein. Das andere Ende der Feder 32 kann am beweglichen Teil der Reibungsbremse 1, wie z.B. dem Bremssattel 4 oder der Verschleißnachstelleinrichtung 7, oder aber auch an einem feststehenden Teil der Reibungsbremse 1, wie z.B. dem Radlagerteil 2, angeordnet sein, womit der Halteteil 13 beim Zurückschwenken des Betätigungsteils 20 durch die Feder 32 wieder in die Ausgangslage zurückgezogen wird. Um die Reibung zwischen Nockenoberfläche und Halteteil 13 zu verringern kann vorgesehen sein, die Oberfläche der Nocke 31 gegenüber dem Halteteil 13 reibungsarm zu lagern, z.B. in einem geeigneten Wälzlager. In diesem Fall könnte das Lager auch so ausgestaltet sein, dass der Halteteil 13 fest mit der Nocke 31 verbunden ist, z.B. über den Lagerkäfig, womit der Halteteil 13 beim Zurückschwenken des Betätigungsteils 20 zurückgezogen werden würde und die Feder 32 überflüssig wäre.

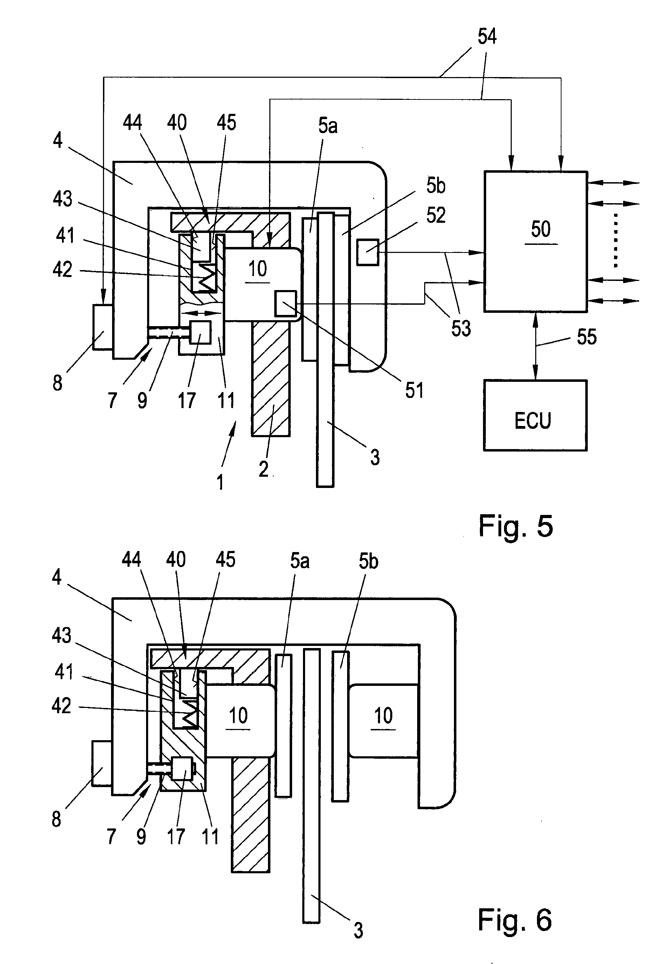

Es ist aber selbstverständlich auch möglich, die Verschleißnachstelleinrichtung 7 und/oder die Verschleißnachstellanschläge 12 anders auszuführen, oder die Reibungsbremse 1 ohne Verschleißnachstelleinrichtung 7 auszuführen. Im letzten Fall könnte die Andrückeinrichtung 10 direkt an einem beweglichen Bremsenteil, wie z.B. im gezeigten Ausführungsbeispiel dem Bremssattel 4, angeordnet sein. Die Andrückeinrichtung 10 könnte aber auch an einem feststehenden Bremsenteil, wie z.B. einem Fixsattel, angeordnet sein. Ebenso ist es denkbar, den Bremssattel 4 nicht als Schwimmsattel auszuführen, sondern nur einen Bremsbelag 5 auf einer Seite der Bremsscheibe 3 vorzusehen. Die Verschleißnachstelleinrichtung 7 könnte auch auf der anderen Seite der Bremsscheibe 3 erfolgen (hier also fahrzeugaußenseitig) oder an beiden Seiten der Bremsscheibe 3. Ebenso ist es möglich, beidseitig der Bremsscheibe 3 jeweils eine Andrückeinrichtung 10 mit Bremsbelag 5 anzuordnen (wie in Fig. 6 angedeutet). Die Andrückbewegungen werden dabei kleiner, weil sie nur noch einen Belag andrücken müssen. Das kann zu besseren Reaktionszeiten führen oder Optimierungen in der Übersetzung der Andrückung zulassen. Insbesondere ergibt sich dadurch eine besonders vorteilhafte Ausgestaltung einer erfindungsgemäßen Reibungsbremse 1 mit einem als Schwimmsattel ausgeführtem Bremssattel 4, an dem an einer Seite der Bremsscheibe 3 eine Verschleißnachstelleinrichtung 7 angeordnet ist, auf der eine erste Andrückeinrichtung 10 mit Bremsbelag 5a angeordnet ist und auf der anderen Seite der Bremsscheibe 3 eine zweite Andrückeinrichtung 10 mit Bremsbelag 5b am Bremssattel 4 angeordnet ist (Fig. 6).

Um die benötigten hohen Andrückkräfte bei sehr kleinen Hüben und bei niedriger Betätigungsenergie erreichen zu können, sind sehr hohe Kraftübersetzungen notwendig, die dadurch erreicht werden, dass die Exzentrizität E sehr klein gewählt wird oder die Erhebungskurve einer Nocke 31 entsprechend gestaltet wird. Für die erfindungsgemäße Scheibenbremse 1 liegt die Exzentrizität E oder die Erhebung der Nocke 31 bei PKW im Bereich von ca. 0,1 mm bis 1 mm, womit bei ausreichender Kompaktheit der Scheibenbremse 1 Kraftübersetzungen von ca. 1:20 bis 1:500 (bei Längen des Hebelteils 22 bei PKW von ca. 20mm bis 50mm) realisierbar sind. Die Untergrenze der Exzentrizität E bzw. der Erhebung der Nocke 31 ergibt sich aus der elastischen Verformung der Konstruktionsteile, die überwunden werden muss. Die Länge des Hebelteils 22 wird aufgrund der verfügbaren kleinen Einbauabmessungen klein gewünscht. Die Andrückkräfte sinken dabei bei gleichbleibendem Betätigungsantrieb 15 (bzw. bei gleichbleibender Betätigungsenergie) natürlich proportional zur Länge des Hebelteils 22. Bei leichten PKW wird eine kleinere Exzentrizität E bzw. Erhebung der Nocke 31 genügen, bei Schwerfahrzeugen (LKW, Eisenbahnen) wird die Exzentrizität E bzw. die Erhebung der Nocke 31 entsprechend den Elastizitäten und Andrückkräften größer benötigt.

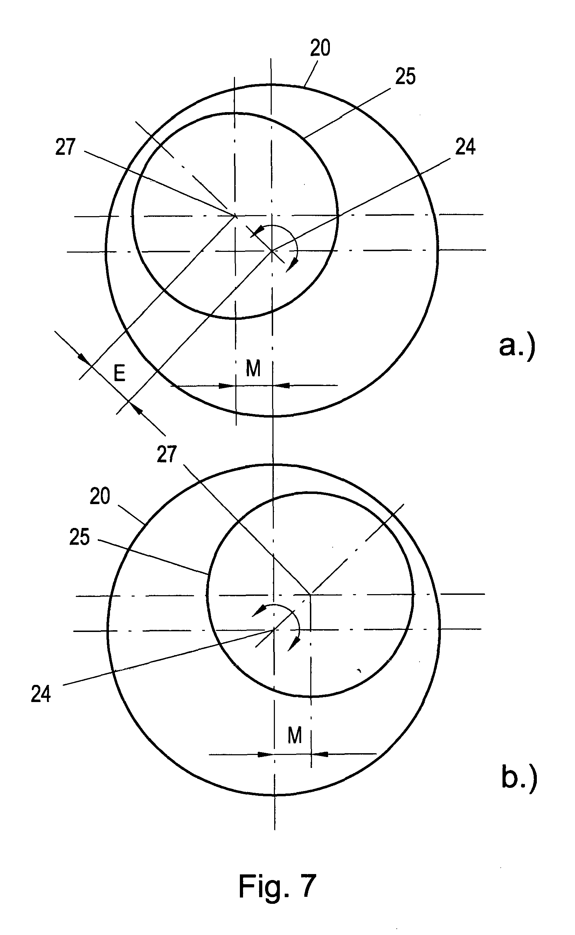

Die Exzentrizität E bzw. die Erhebungskurve der Nocke 31 kann aber nicht nur dem Betrag nach gewählt werden, sondern auch im Winkel gegenüber einer Referenzachse, wie z.B. der Symmetrieachse des Hebelteils 22. Wenn der Bremsbelag 5 bei Bremsung aufgrund der Reibung durch den Bremsbelag 5 mitgenommen wird, kann die Mitnahmekraft entweder gegen die Andrückkraft oder die Andrückkraft unterstützend arbeiten, womit sogar eine "negative" Selbstverstärkung (also eine "Selbstschwächung") möglich ist. Durch Wahl der Lage der Exzentrizität E oder durch entsprechende Gestaltung der Erhebungskurve einer Nocke 31 (und eventueller Gestaltung des Anschlags am Halteteil 13) kann also eine Kombination aus Selbstschwächung und Selbstverstärkung eingestellt werden, wie anhand der Fig. 7 am Beispiel einer Exzentrizität E erläutert wird. Eine Erhebungskurve einer Nocke 31 könnte natürlich entsprechend gestaltet sein. In Fig. 7a ist eine mögliche Ausgangsposition des Betätigungsteils 20, an dem wie oben beschrieben ein Zapfen 25 exzentrisch angeordnet ist, dargestellt. Wird die Andrückeinrichtung 10 betätigt, also der Betätigungsteil 20 um die Drehachse 24 verschwenkt, so wandert die Drehachse 27 des Zapfens 25 (und damit auch der daran befestigte Halteteil 13) von Ausgangspunkt (Fig. 7a) links der Drehachse 24 (Bereich der Selbstschwächung) über den Scheitelpunkt (keine Selbstverstärkung) bis zum Endpunkt (Fig. 7b) rechts der Drehachse 24 (Bereich der Selbstverstärkung). Selbstschwächung bzw. Selbstverstärkung ergibt sich dabei aus den Angriffspunkten der wirkenden Kräfte (Mitnahmekraft, Andrückkraft). D.h. der Schwenkwinkel in dem der Betätigungsteil 20 verdreht werden kann bestimmt zusammen mit dem Mittenabstand M der Drehachsen 24, 27 (entspricht dem Winkel der Exzentrizität E gegenüber dem Hebelteil 22) und der Exzentrizität E den Verlauf der Betätigungskräfte der Reibungsbremse 1. Die Selbstverstärkung kann dabei wie gezeigt von Bereichen größerer Selbstverstärkung über Bereiche ohne Selbstverstärkung bis hin zu Bereichen entgegenwirkender Kräfte, die im Gegensatz zu Selbstverstärkung sogar höhere Betätigungskräfte erfordern, gewählt werden, wobei die dadurch auftretende Selbstverstärkung immer nur als Unterstützung zur von der Andrückeinrichtung 10 aufgebrachten Andrückkraft zu sehen ist. Selbstverständlich hat man dadurch auch die Möglichkeit nur Selbstschwächung oder nur Selbstverstärkung vorzusehen. Es kann auch ein vorteilhafter Verlauf der Betätigungskräfte über einen weiten Bereich der Bremsbetätigung (von schwacher Bremsung bis Vollbremsung) gestaltet werden. Z.B. kann im Bereich kleiner Bremsmomente und Andrückkräfte "negative" Selbstverstärkung gewählt werden, bei steigenden Bremsmomenten und Andrückkräften kann der Bereich ohne Selbstverstärkung durchlaufen werden und bei höchsten Bremsmomenten und Andrückkräften kann die Selbstverstärkung die Betätigungskräfte verringern. Daraus kann ein einigermaßen gleichmäßiger Verlauf der Betätigungskräfte über die gewünschten Bremsmomente und Andrückkräfte gestaltet werden. Durch Kombination der Einstellbewegungen (Anlegen der Beläge mit Verschleißnachstelleinrichtung 7 und Andrücken der Bremsbeläge mit Andrückeinrichtung 10) kann ohne bauliche Veränderung der Reibungsbremse 1 das Maß der Selbstverstärkung und damit auch der Verlauf der Betätigungskräfte eingestellt werden. Wenn sich das elastische Verhalten der Reibungsbremse 1 (z.B. durch Verschleiß der Bremsbeläge 5) ändert, kann ebenfalls die Kombination obiger beiden Bewegungen genutzt werden, um einen für die jeweilige Bremsung vorteilhaften Verlauf der Betätigungskräfte trotz veränderter Daten (elastisches Verhalten) zu erwirken.

Nach einer Bremsung soll vorzugsweise das Lüftspiel wiederhergestellt werden, damit im normalen bremsfreien Fall möglichst wenig unnütze Reibung zwischen Bremsbelag 5 und Bremsscheibe 3 entsteht. Im Falle eines als Schwimmsattel ausgeführten Bremssattels 4 mit beidseitig der Bremsscheibe 2 angeordneten Bremsbelägen 5a, 5b (bei einer Scheibenbremse oder Lamellenbremse), stellt sich Lüftspiel nach einer Bremsung aber nicht von selbst wieder beidseitig ein, sondern muss wiederhergestellt werden. Der Grund dafür liegt darin, dass nach Beendigung der Bremsung die Verschleißnachstelleinrichtung 7 zwar wieder ein kleines Lüftspiel des Bremsbelages 5 herstellt, dieses Lüftspiel aber zuerst nur auf der Seite der Verschleißnachstelleinrichtung 7 auftritt. Erst wenn die Haftreibung des Schwimmsattels an seinen Führungen überwunden wird, kann auch auf der zweiten Seite ein Lüftspiel entstehen. Zur beidseitigen Lüftung der Bremse nach einer Bremsung für besonders reibungsarmen Lauf des Rades ist vorzugsweise zusätzlich eine Lüftspielwiederherstellungseinrichtung 40 vorgesehen, wie nachfolgen unter Bezugnahme auf die Figuren 5 und 6 beschrieben.

Die Lüftspielwiederherstellungseinrichtung 40 besteht aus einem Stift 43, der in einer Ausnehmung 41 am beweglichen Teil der Verschleißnachstelleinrichtung 7, wie z.B. dem Verschleißnachstellteil 11, angeordnet ist und der durch eine Feder 42 gegen einen ortsfesten Teil der Scheibenbremse 1, wie z.B. den Radlagerteil 2, federbelastet ist. Der Stift 43 hat dabei in der Ausnehmung 41 zwischen den sich ergebenden Anschlägen 44, 45 Spiel, damit sich der Stift 43 in der Ausnehmung 41 zwischen den Anschlägen 44, 45 bewegen kann. Im gebremsten Zustand (Fig. 5) ist die Verschleißnachstelleinrichtung 7 zur Überwindung des Lüftspiels angestellt und die Andrückeinrichtung 10 betätigt, sodass die Bremsbeläge 5a, 5b gegen die Bremsscheibe 3 gedrückt werden. Der Stift 43 wird dabei im Zuge langsamer, fortwährender Verschleißnachstellung im Zuge des Verschleißes der Bremsbeläge 5a, 5b immer weiter nach rechts wandern, weil er vom Anschlag 44 immer weiter nach rechts mitgenommen wird.

Wenn die Bremse 1 nach Bremsung wieder Lüftspiel erhalten soll, fährt nun die Verschleißnachstelleinrichtung 7 die Andrückeinrichtung 10 (die z.B. wie oben beschrieben ausgeführt sein kann) wie vorgesehen zuerst von der Bremsscheibe 3 zurück und entfernt so den Bremsbelag 5a von der Bremsscheibe 3. Die Andrückeinrichtung 10 ist zu diesem Zeitpunkt bevorzugt bereits deaktiviert. Der federbelastete Stift 43 wird dabei vom Anschlag 44 an den Anschlag 45 wandern. Aufgrund Haftreibung im Schwimmsattel an seinen Führungen wird sich bis zu diesem Augenblick der Schwimmsattel nicht bewegen, d.h. der Bremsbelag 5b wird weiter an der Bremsscheibe 3 anliegen. Eine absichtlich noch weitere Abhebebewegung durch die Verschleißnachstelleinrichtung 7 (Fig. 6) führt nun dazu, dass sich der Anschlag 45 am federbelasteten Stift 43 abstützt und den ganzen Schwimmsattel entgegen der Abhebebewegung (in der Fig. 6 nach rechts) verschiebt. Das funktioniert immer dann, wenn die Reibung zwischen federbelasteten Stift 43 und Radlagerteil 2 größer ist als die Haftreibung des Schwimmsattels in seiner Führung, was durch geeignete Wahl der Materialien bzw. der Feder 42 einfach einstellbar ist. Somit kann bei beiden Bremsbelägen 5a, 5b ein Lüftspiel eingestellt werden. Durch die normale Verschleißnachstellbewegung durch die Verschleißnachstelleinrichtung 7 wird der Stift 43 in der Ausnehmung 42 durch den Anschlag 44 mitgenommen. In Fig. 6 wird darüber hinaus eine Ausgestaltung der Reibungsbremse 1 gezeigt, bei der an beide Bremsbeläge 5a, 5b je eine Andrückeinrichtung 10 angreift.

Alternativ dazu könnte als Lüftspielwiederherstellungseinrichtung 40 auch ein eigener Antrieb zum Verschieben des beweglichen Teils der Reibungsbremse 1 in eine Position, in der die Bremsbeläge 5 gelüftet sind, vorgesehen sein.

Bremsbauteile (z.B. die Bremsbeläge 5 oder die Bremsscheibe 3) erhitzen sich beim Bremsen und erfahren dadurch eine gewisse Wärmedehnung. Deshalb kann der Fall eintreten, dass die Andrückeinrichtung 10 nach Beendigung eines Bremsvorganges zwar die Andrückbewegung zurückfährt, aber durch hitzegedehnte Bauteile auch bei zurückgefahrener Andrückeinrichtung die Bremsbeläge 5 nicht von der Bremsscheibe 3 abheben und noch Andrückkräfte bestehen bleiben. Das könnte in weiterer Folge dazu führen, dass so große Kräfte in der Verschleißnachstelleinrichtung 7 bleiben, dass diese keine Bewegung für Lüftspiel erzeugen kann, da dazu die verfügbare Betätigungsenergie des Verschleißnachstellmotor 8 mitunter nicht ausreicht. Die Bremse würde somit weiter erheblich schleifen, was die Situation noch weiter verschlechtern würde und bis zum Blockieren der Bremse führen könnte. Um das zu verhindern, kann vorgesehen sein, die Andrückeinrichtung 10 mit einer Wegreserve in Form eines zusätzlich verfügbaren Abhebewegs auszuführen. Bei Beginn der Bremsung aus einer Grundstellung wird diese Wegreserve nicht in Anspruch genommen. Beim Beenden der Bremsung kann nun diese kleine Wegreserve genutzt werden, um die Andrückeinrichtung 10 über die Grundstellung hinaus zurückzuziehen und damit den Halteteil 13 um die verfügbare Wegreserve zusätzlich in Abheberichtung abzuheben und damit das Abheben der Bremsbeläge 5 trotz Hitzedehnung zu unterstützen. Die Wegreserve kann z.B. durch geeignete Wahl der Exzentrizität E (Lage und/oder Winkel) oder durch die Gestaltung der Erhebungskurve einer Nocke 31 realisiert sein. Eine andere Möglichkeit besteht darin, eine Leistungsreserve in der Verschleißnachstelleinrichtung 7, vorzugsweise im Verschleißnachstellmotor 8, bereitzuhalten, um trotz verbleibender Restkräfte durch Wärmedehnung die Verschleißnachstelleinrichtung 7 lösen zu können und wieder Lüftspiel an den Bremsbelägen 5 herzustellen. Die beiden beschriebenen Methoden können dabei einzeln oder gemeinsam genutzt werden.

Bei elektrischen Aktuatoren, wie z.B. Elektromotoren, kann gut von Strömen (Spannungen) auf mechanische Kräfte, Drehmomente und Leistungen geschlossen werden. Daher kann bei dieser Bremse sowohl mit Messung von Motorstrom, Spannung, Leistung als auch mit zusätzlichen Sensoren (Kraft, Weg, Drehmoment, Beschleunigung) und Zeitmessungen auf die Einstellungszustände der Bremse geschlossen werden (Kräfte, Positionen der Bremsenteile, Drehmomente, Beschleunigung). Dazu kann eine Steuereinheit 50 vorgesehen sein (Fig. 5), die Messwerte von verschiedenen, an der Reibungsbremse angeordneten Sensoren 51, 52 erhalten kann bzw. aus erhaltenen Messwerte weitere Werte ermittelt (z.B. Drehmoment oder Kraft aus dem Motorstrom) und diese Messwerte bzw. weiteren Werte zu einem Steuersignal verarbeitet und damit die Verschleißnachstelleinrichtung 7 und/oder die Andrückeinrichtung 10 ansteuert. Die Steuereinheit 50 ist dazu über eine Verkabelung 53 mit den Sensoren 51, 52 verbunden und über eine weitere Verkabelung 54 mit der Verschleißnachstelleinrichtung 7 und/oder die Andrückeinrichtung 10 verbunden. Die Steuereinheit 50 kann auch von der Verschleißnachstelleinrichtung 7 und/oder die Andrückeinrichtung 10 Messwerte erhalten, wie z.B. Motorstrom, Spannung, Leistung, und kann daraus andere Werte ermitteln. Die Steuereinheit 50 kann auch eine Schnittstelle 55 aufweisen, z.B. um Daten mit einer Fahrzeugsteuereinheit oder Motorsteuereinheit (ECU) auszutauschen. Die Steuereinheit 50 könnte aber auch in einer ECU integriert sein.

Elektrische Stromkreise (wie zur Steuerung dieser Bremse) bieten den Vorteil, dass sie im Vergleich zu Hydraulik oder Pneumatik relativ leicht zweikanalig bzw. redundant ausgeführt werden können und durch elektrische Messungen relativ leicht auf Funktion überwacht werden können, z.B. durch die Steuereinheit 50. Daher kann bei dieser Bremse zur Erhöhung der Betriebssicherheit einfach eine redundante Verkabelung, Sensorik, Aktuatoren (z.B. der Verschleißnachstellmotor 8 oder der Betätigungsantrieb 15), Elektrikeinheit und/oder Elektronikeinheit vorgesehen werden und/oder diese durch die Steuereinheit 50 auf Einsatzfähigkeit (z.B. durch Messung von Ströme, Vergleiche von Messwerten oder Messwerten zu gespeicherten Werten) überwacht werden, gegebenenfalls Gegenmaßnahmen ergriffen werden und/oder Fehler angezeigt werden. Es kann im Fehlerfall von der Steuereinheit 50 z.B. versucht werden, nur mit der Verschleißnachstelleinrichtung 7 alleine oder nur mit der Andrückeinrichtung 10 alleine eine Bremswirkung zu erzielen. Auch die einzelnen Radbremsen können redundant genutzt werden, d.h. dass bei Ausfall einzelner Radbremsen (oder nicht korrigierbarer Fehlern) die Steuereinheit 50 die verbleibenden Bremsen entsprechend ansteuert, die dann die vorgesehenen Aufgaben übernehmen. Es kann aber auch die Steuereinheit 50 selbst redundant vorgesehen sein.

Mit der erfindungsgemäßen Reibungsbremse 1 ist es auch leicht möglich, eine Parkbremsfunktion oder eine Anfahrhilfe (gegen Wegrollen, "Hillholder") zu verwirklichen. Solche Funktionen lassen sich einfach in der Steuereinheit 50 realisieren, die die Bremsenteile dann entsprechend ansteuert. Dazu kann z.B. besonders vorteilhaft die Verschleißnachstelleinrichtung 7 verwendet werden, die über die Gewindespindel 9 selbstsperrend ist und folglich dessen Antrieb zur Aufrechterhaltung der Anstellung nicht dauernd energetisiert sein muss, oder mit einer Andrückeinrichtung 10, die in energielosem Zustand nicht von Seite der Belagsandrückkräfte zurückgestellt werden kann, oder aber auch eine Kombination aus Verschleißnachstelleinrichtung 7 und Andrückeinrichtung 10.

Mechanische Bremsbetätigungen haben bekannter Weise eine sogenannte "Hysterese", d.h. ungleiches Verhalten bei Betätigung und Entlastung aufgrund der auftretenden Haftreibung. Wenn z.B. die Bremswirkung leicht verringert werden soll, können sich aufgrund Haftreibung die beweglichen Teile noch nicht bewegen, bis sie schließlich ruckartig die Bremswirkung vermindern. Diesem unangenehmen Verhalten kann mit der erfindungsgemäßen Reibungsbremse 1 dadurch entgegengewirkt werden, indem die beweglichen Bremsenbauteile reibungsarm gelagert sind und/oder in den entsprechenden Betätigungs- und Anstellvorgängen mit Wegvorgaben statt Kraftvorgaben gearbeitet wird und/oder die Bremsenhysterese der Steuereinheit 50 bekannt ist und darin bei der Erzeugung der Steuersignale an die Verschleißnachstelleinrichtung 7 und/oder die Andrückeinrichtung 10 berücksichtigt und kompensiert wird. Bei Wegvorgaben durch die Steuereinheit 50 müssen sich die in einem geschlossenen Regelkreis angesteuerten beweglichen Bremsenbauteile bewegen, bei Kraftvorgaben bewegen sie sich erst bei Überwindung von Haftreibung, was z.B. durch die Steuereinheit 50 kompensiert werden könnte. Wenn z.B. eine leicht verringerte Bremswirkung verlangt wird, kann mit dem Wegvorgabeverfahren die Andrückeinrichtung 10 entsprechend zurückgefahren werden und damit Hysterese vermieden werden. Umgekehrt kann bei notwendiger starker Erhöhung der Bremswirkung aber auch mit Kraftvorgaben (z.B. über elektrische Messungen) gearbeitet werden, um die Anpresskräfte und damit über den bekannten Reibbeiwert die Bremskräfte zu kennen.

Bei einer Ausführung der Reibungsbremse 1 als Lamellenbremse wäre in bekannter Weise ein Lamellenpaket am drehenden Teil und ein Lamellenpaket am stehenden Teil vorgesehen und das Zusammenspannen der Lamellenpakete kann z.B. über ein äußeres Gehäuse erfolgen oder einer Hohlwelle um die Achse können z.B. die beiden Innenbacken auseinander gedrückt werden (Belagsandrückkraft). Der Verschleißnachsteller wäre ähnlich wie bei einer Scheibenbremse vor dem Andrückmechanismus angebracht. Ähnlich einem Schwimmsattel können die Bremsbeläge frei beweglich zur Selbstzentrierung sein, d.h. Verschleißnachsteller und Andrückeinrichtung arbeiten auf die beiden Bremsbeläge und sind gegen feste Teile zur Selbstzentrierung der Beläge verschiebbar. Da viele Ausführungsvarianten von Backenbremsen existieren, kann nicht auf alle eingegangen werden, gemeinsam ist das Auseinanderdrücken (Innenbackenbremse) oder Zusammendrücken (Außenbackenbremse) der Bremsbeläge.

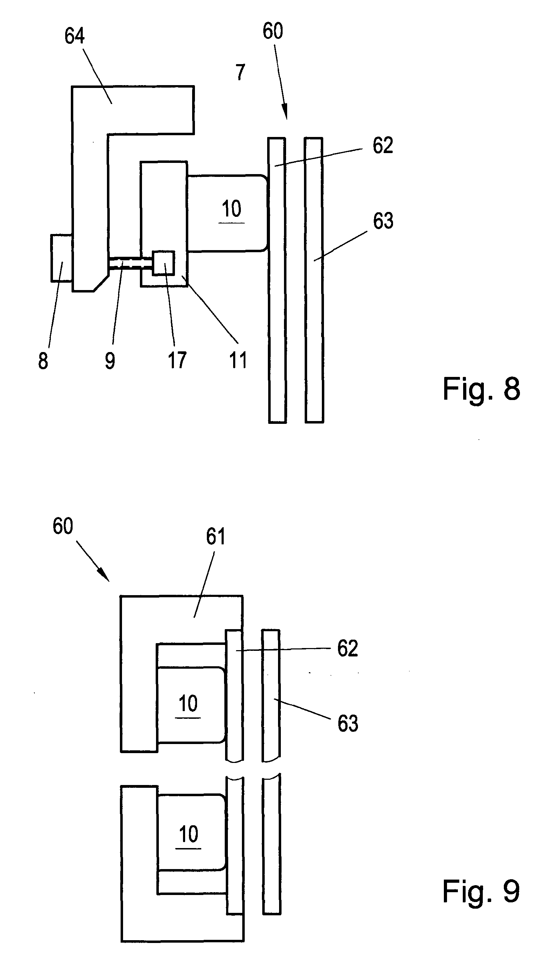

Da vom grundsätzlichen konstruktiven Aufbau, insbesondere betreffend der Andrückeinrichtung 10 und der Verschleißnachstelleinrichtung 10, zwischen einer Reibungsbremse und einer Reibkupplung kein Unterschied besteht, kann die oben beschriebene Reibungsbremse aber auch als Reibkupplung 60 gesehen bzw. verwendet werden, wie nachfolgend anhand der Figuren 8 und 9 beschrieben wird. Der Reibbelag 5, der bei einer Reibkupplung 60 in der Regel eine ganze Scheibe ist, ist dabei eine erste Kupplungsscheibe 62 oder Teil einer ersten Kupplungsscheibe 62 und die Reibfläche bzw. die Bremsscheibe 3 die zweite Kupplungsscheibe 63, wobei die erste 62 und zweite Kupplungsscheibe 63 durch eine Andrückeinrichtung 10 aneinandergedrückt werden. Die erste Kupplungsscheibe 62 könnte aber auch eine Scheibe sein, auf der Reibbeläge aufgebracht sind. Die Andrückeinrichtung 10 könnte wie bei einer Reibungsbremse 1 an einer Verschleißnachstelleinrichtung 7 angeordnet sein. Durch die Andrückeinrichtung 10 können somit sehr hohe Andrückkräfte erzeugt werden, womit mit einer solchen Reibkupplung 60 hohe Drehmomente übertragen werden können.

In einer Ausführung, bei der der Reibbelag 5 am Halteteil 13 der Andrückeinrichtung 10 anliegend angeordnet ist, kann die Andrückeinrichtung 10 und gegebenenfalls die Verschleißnachstelleinrichtung 7 ortsfest angeordnet sein, wie in Fig. 8 gezeigt. Dazu ist die Andrückeinrichtung 10 und eventuell die Verschleißnachstelleinrichtung an einem ortsfesten Kupplungsteil 64 oder anderen ortsfesten Bauteil wie oben beschrieben angeordnet. D.h. die erste Kupplungsscheibe 62, gegebenenfalls mit Reibbelag, rotiert relativ zur zweiten Kupplungsscheibe 63 (Bremsscheibe) und wird durch die Andrückeinrichtung 10 gegen die zweite Kupplungsscheibe 63 gedrückt. Natürlich kann auch bei einer Reibkupplung 60 eine zweite Andrückeinrichtung 10 vorgesehen sein, die auf die zweite Kupplungsscheibe wirkt.

Bei einer Ausführung, bei der der Reibbelag 5 starr mit dem Halteteil 13 verbunden ist bzw. die Nocke 31 in einer Ausnehmung 33 des Halteteils 13 eingreift, wird bei einer Reibkupplung 60 die Andrückeinrichtung 10 und der Teil, auf dem die Andrückeinrichtung 10 befestigt ist, z.B. ein Sattel, mit der Kupplungsscheibe mitdrehend angeordnet. Dazu kann am ersten Kupplungsscheibe 62 ein Aufnahmeteil 61 mitdrehend angeordnet sein, an dem dann die Andrückeinrichtung 10 (und falls vorhanden auch die Verschleißnachstelleinrichtung 7) angeordnet ist. Zwecks Ausgleich der dadurch entstehenden Unwucht sind bevorzugt zwei diametral gegenüberliegende Andrückeinrichtungen 10 und gegebenenfalls Verschleißnachstelleinrichtungen 7 vorgesehen. Selbstverständlich kann, wie auch bei der Reibbremse 1, beidseitig der Kupplungsscheiben jeweils eine oder mehrere Andrückeinrichtung(en) 10 vorgesehen sein.

## Patentansprüche

1. Reibungsbremse mit einem Bremsenteil, vorzugsweise ein Bremssattel (4), an dem eine Andrückeinrichtung (10) zum Andrücken eines Reibbelages (5) gegen eine Reibfläche, vorzugsweise eine Bremsscheibe (3), angeordnet ist, wobei an der Andrückeinrichtung (10) ein Halteteil (13), an dem der Reibbelag (5) anliegt, und weiters ein Betätigungsteil (20) vorgesehen sind, und wobei der Betätigungsteil (20) am Bremsenteil drehbar gelagert angeordnet ist und am Betätigungsteil (20) ein Betätigungsmittel (14) zum Verschwenken des Betätigungsteils (20) angreift, **dadurch gekennzeichnet, dass** am Betätigungsteil (20) ein Zapfen (25) angeordnet ist und der Zapfen (25) im Halteteil (13) drehbar gelagert angeordnet ist wobei die Drehachse (27) des Zapfens (25) exzentrisch zur Drehachse (24) des Betätigungsteils (20) angeordnet ist.

2. Reibungsbremse nach Anspruch 1, **dadurch gekennzeichnet, dass** als Betätigungsteil (20) ein Wellenstück (23) vorgesehen ist, an dessen axialem Ende der Zapfen (25) angeordnet ist.

3. Reibungsbremse nach Anspruch 1, **dadurch gekennzeichnet, dass** als Betätigungsteil (20) eine Hohlwelle vorgesehen ist, wobei die durchgehende axiale Ausnehmung (29) exzentrisch zur Drehachse (24) der Hohlwelle angeordnet ist und der Zapfen (25) in die Ausnehmung (29) gesteckt ist.

4. Reibungsbremse nach Anspruch 1, **dadurch gekennzeichnet, dass** als Betätigungsteil (20) eine Hohlwelle vorgesehen ist, wobei die durchgehende axiale Ausnehmung (30) mit einem nicht-kreisrunden Querschnitt ausgeführt ist und der Zapfen (25) in die Ausnehmung (30) gesteckt ist.

5. Reibungsbremse nach einem der Ansprüche 1 bis 4, **dadurch gekennzeichnet, dass** der Reibbelag (5) am Halteteil (13) starr befestigt ist.

6. Reibungsbremse nach einem der Ansprüche 1 bis 5, **dadurch gekennzeichnet, dass** die Drehachse (27) des Zapfens (25) in einer Ausgangsposition so angeordnet ist, dass durch die sich dadurch einstellende Exzentrizität (E) in Abstand und Winkel zur Drehachse (24) des Betätigungsteils (20) zu Beginn der Andrückbewegung des Bremsbelages eine Selbstschwächung und/oder am Ende der Andrückbewegung eine Selbstverstärkung eintritt.

7. Reibungsbremse nach einem der Ansprüche 1 bis 6, **dadurch gekennzeichnet, dass** am Betätigungsteil (20) ein Hebelteil (22) angeordnet ist, an dem das Betätigungsmittel (14) angreift.

8. Reibungsbremse nach einem der Ansprüche 1 bis 7, **dadurch gekennzeichnet, dass** am Bremsenteil eine Verschleißnachstelleinrichtung (7) vorgesehen ist und die Andrückeinrichtung (10) an der Verschleißnachstelleinrichtung (7) angeordnet ist.

9. Reibungsbremse nach Anspruch 8, **dadurch gekennzeichnet, dass** an der Verschleißnachstelleinrichtung (7) ein Verschleißnachstellantrieb (8) angeordnet ist, der eine Gewindespindel (9) antreibt, auf der eine Gewindehülse (17) angeordnet ist, die in einem Verschleißnachstellteil (11) angeordnet ist und die Andrückeinrichtung (10) am Verschleißnachstellteil (11) angeordnet ist.

10. Reibungsbremse nach Anspruch 8, **dadurch gekennzeichnet, dass** an der Verschleißnachstelleinrichtung (7) eine Lüftspielwiederherstellungseinrichtung (40) vorgesehen ist, die nach einer Bremsung ein Lüftspiel wiederherstellt.

11. Reibungsbremse nach Anspruch 10, **dadurch gekennzeichnet, dass** am beweglichen Teil der Verschleißnachstelleinrichtung (7), vorzugsweise dem Verschleißnachstellteil (11), eine Ausnehmung (41) vorgesehen ist, in der ein Stift (43) angeordnet ist und dieser Stift (43) durch eine Feder (42) gegen einen ortsfesten Teil der Reibungsbremse (1), vorzugsweise einem Radlagerteil (2), federbelastet ist, wobei der Stift (43) in der Ausnehmung (41) mit seitlichem Spiel eingebaut ist.

12. Reibungsbremse nach einem der Ansprüche 1 bis 11, **dadurch gekennzeichnet, dass** an der Andrückeinrichtung (10) eine Wegreserve vorgesehen ist, um den Halteteil (13) über eine Grundstellung hinaus zurückzuziehen.

13. Reibungsbremse nach einem der Ansprüche 8 bis 11, **dadurch gekennzeichnet, dass** die Verschleißnachstelleinrichtung (7) mit einer Leistungsreserve ausgeführt ist, um die nach einer Bremsung verbleibenden Andrückkräfte zu überwinden.

14. Reibungsbremse nach einem der Ansprüche 8 bis 13, **dadurch gekennzeichnet, dass** eine Steuereinheit (50) vorgesehen ist, die über eine Verkabelung (53) mit einem an einem Teil der Reibungsbremse (1) angeordneten Sensor (51, 52) verbunden ist und von diesem Messwerte erhält und die Messwerte zu einem Steuersignal verarbeitet und die Steuereinheit (50) über eine Verkabelung (54) mit der Verschleißnachstelleinrichtung (7) und/oder der Andrückeinrichtung (10) verbunden ist und diese ansteuert.

15. Reibungsbremse nach Anspruch 14, **dadurch gekennzeichnet, dass** aus den gemessenen Messwerten in der Steuereinheit (50) weitere Werte ermittelbar und zu einem Steuersignal verarbeitbar sind.

16. Reibungsbremse nach Anspruch 14 oder 15, **dadurch gekennzeichnet, dass** in der Steuereinheit (50) die Einsatzfähigkeit der Reibungsbremse (1) durch Messung von elektrischen Größen oder durch Vergleiche von Messwerten oder durch Vergleich von Messwerten zu gespeicherten Werten überwachbar ist.

17. Reibungsbremse nach Anspruch 16, **dadurch gekennzeichnet, dass** die Steuereinheit (50) im Fehlerfall für eine Bremsung nur die Verschleißnachstelleinrichtung (7) oder nur die Andrückeinrichtung (10) ansteuert.

18. Reibungsbremse nach einem der Ansprüche 14 bis 17, **dadurch gekennzeichnet, dass** eine Verkabelung (53, 54), ein Sensor (51, 52), ein Aktuator, eine Steuereinheit (50), eine Elektrikeinheit und/oder eine Elektronikeinheit der Reibungsbremse (1) redundant vorgesehen ist.

19. Reibungsbremse nach einem der Ansprüche 14 bis 18, **dadurch gekennzeichnet, dass** die Steuereinheit (50) die Verschleißnachstelleinrichtung (7) und/oder die Andrückeinrichtung (10) zur Realisierung einer Parkbremsfunktion oder einer Anfahrhilfe ansteuert.

20. Reibungsbremse nach einem der Ansprüche 1 bis 19, **dadurch gekennzeichnet, dass** die Steuereinheit (50) für die gewünschten Betätigungs- oder Anstellvorgänge eine Wegvorgabe an die Verschleißnachstelleinrichtung (7) und/oder die Andrückeinrichtung (10) ermittelt und der Verschleißnachstelleinrichtung (7) und/oder die Andrückeinrichtung (10) das Steuersignal der Wegvorgabe sendet.

21. Reibungsbremse nach einem der Ansprüche 1 bis 19, **dadurch gekennzeichnet, dass** für die Reibungsbremse (1) die Bremsenhysterese in der Steuereinheit (50) gespeichert ist und die Steuereinheit (50) die Bremsenhysterese bei der Erzeugung eines Steuersignals an die Verschleißnachstelleinrichtung (7) und/oder die Andrückeinrichtung (10) kompensiert.

22. Reibungsbremse nach einem der Ansprüche 1 bis 21, **dadurch gekennzeichnet, dass** beidseitig der Reibfläche ein Reibbelag (5a, 5b) angeordnet ist und beidseitig eine Andrückeinrichtung (10) vorgesehen ist.

23. Reibungsbremse nach Anspruch 22, **dadurch gekennzeichnet, dass** eine der beiden Andrückeinrichtungen (10) an einer Verschleißnachstelleinrichtung (7) angeordnet ist.

24. Verwendung der Reibungsbremse nach einem der Ansprüche 1 bis 23 als Reibkupplung, wobei der Reibbelag (5) eine erste Kupplungsscheibe (62) oder Teil einer ersten Kupplungsscheibe (62) ist und die Reibfläche eine zweite Kupplungsscheibe (63) ist und die Andrückeinrichtung (10) die erste Kupplungsscheibe (62) gegen die zweite Kupplungsscheibe (63) drückt.

25. Verwendung nach Anspruch 24, **dadurch gekennzeichnet, dass** die Andrückeinrichtung (10) an einer Verschleißnachstelleinrichtung (7) angeordnet ist.

26. Verwendung nach Anspruch 24 oder 25, **dadurch gekennzeichnet, dass** die Andrückeinrichtung (10) und gegebenenfalls die Verschleißnachstelleinrichtung (7) ortsfest angeordnet sind.

27. Verwendung nach Anspruch 24 oder 25, **dadurch gekennzeichnet, dass** die Andrückeinrichtung (10) und gegebenenfalls die Verschleißnachstelleinrichtung (7) mit der ersten Kupplungsscheibe (62) mitdrehend angeordnet sind.

## Claims

1. A friction brake comprising a brake part, preferably a brake caliper (4), on which a pressure device (10) is arranged for pressing a friction lining (5) against a friction surface, preferably a brake disk (3), wherein a holding part (13) against which the friction lining (5) rests and furthermore an actuating part (20) are provided on the pressure device (10), and wherein the actuating part (20) is rotatably mounted on the brake part, and an actuating means (14) acts on the actuating part (20) for pivoting the actuating part (20), **characterized in that** a pin (25) is arranged on the actuating part (20) and the pin (25) is rotatably mounted in the holding part (13), wherein the rotational axis (27) of the pin (25) is arranged eccentrically to the rotational axis (24) of the actuating part (20).

2. The friction brake according to claim 1, **characterized in that** as an actuating part (20), a shaft piece (23) is provided, at the axial end of which the pin (25) is arranged.

3. The friction brake according to claim 1, **characterized in that** as an actuating part (20), a hollow shaft is provided, wherein the continuous axial recess (29) is arranged eccentrically to the rotational axis (24) of the hollow shaft, and the pin (25) is inserted into the recess (29).

4. The friction brake according to claim 1, **characterized in that** as an actuating part (20), a hollow shaft is provided, wherein the continuous axial recess (30) is implemented with a non-circular cross-section, and the pin (25) is inserted into the recess (30).

5. The friction brake according to any one of the claims 1 to 4, **characterized in that** the friction lining (5) is rigidly fastened to the holding part (13).

6. The friction brake according to any one of the claims 1 to 5, **characterized in that** the rotational axis (27) of the pin (25) is arranged in a home position in such a manner that by the resulting eccentricity (E) in distance and angle with respect to the rotational axis (24) of the actuating part (20), a self-weakening occurs at the beginning of the press-on movement of the brake lining, and/or a self-energization occurs at the end of the press-on movement.

7. The friction brake according to any one of the claims 1 to 6, **characterized in that** on the actuating part (20), a lever part (22) is arranged on which the actuating means (14) acts.

8. The friction brake according to any one of the claims 1 to 7, **characterized in that** on the brake part, a wear adjustment device (7) is provided, and the pressure device (10) is arranged on the wear adjustment device (7).

9. The friction brake according to claim 8, **characterized in that** on the wear adjustment device (7), a wear adjustment drive (8) is arranged which drives a threaded spindle (9) on which a threaded sleeve (17) is arranged which is arranged in a wear adjustment part (11), and the pressure device (10) is arranged on the wear adjustment part (11).

10. The friction brake according to claim 8, **characterized in that** on the wear adjustment device (7), a clearance restoration device (40) is provided which restores a clearance after braking.

11. The friction brake according to claim 10, **characterized in that** on the movable part of the wear adjustment device (7), preferably the wear adjustment part (11), a recess (41) is provided in which a pin (43) is arranged, and this pin (43) is spring-loaded by a spring (42) against a stationary part of the friction brake (1), preferably a wheel bearing part (2), wherein the pin (43) is installed with lateral play in the recess (41).

12. The friction brake according to any one of the claims 1 to 11, **characterized in that** on the pressure device (10), a travel reserve is provided in order to retract the holding part (13) beyond a home position.

13. The friction brake according to any one of the claims 8 to 11, **characterized in that** the wear adjustment device (7) is implemented with a power reserve in order to overcome the remaining press-on forces after braking.

14. The friction brake according to any one of the claims 8 to 13, **characterized in that** a control unit (50) is provided which is connected via a cabling (53) to a sensor (51, 52) arranged on a part of the friction brake (1) and receives measured values from said sensor and processes the measured values into a control signal, and the control unit (50) is connected via a cabling (54) to the wear adjustment device (7) and/or the pressure device (10) and activates the same.

15. The friction brake according to claim 14, **characterized in that** from the measured values, further values can be determined in the control unit (50) and can be processed into a control signal.

16. The friction brake according to claim 14 or 15, **characterized in that** in the control unit (50), the operational capability of the friction brake (1) can be monitored by measuring electrical variables or by comparing measured values or by comparing measured values to stored values.

17. The friction brake according to claim 16, **characterized in that** for braking, in the event of an error, the control unit (50) activates only the wear adjustment device (7) or only the pressure device (10).

18. The friction brake according to any one of the claims 14 to 17, **characterized in that** a cabling (53, 54), a sensor (51, 52), an actuator, a control unit (50), an electric unit, and/or an electronic unit of the friction brake (1) is provided redundantly.

19. The friction brake according to any one of the claims 14 to 18, **characterized in that** the control unit (50) activates the wear adjustment device (7) and/or the pressure device (10) for implementing a parking brake function or a starting aid.

20. The friction brake according to any one of the claims 1 to 19, **characterized in that** for the desired actuating or positioning processes, the control unit (50) determines a travel presetting for the wear adjustment device (7) and/or the pressure device (10) and transmits the control signal of the travel presetting to the wear adjustment device (7) and/or the pressure device (10).

21. The friction brake according to any one of the claims 1 to 19, **characterized in that** the brake hysteresis for the friction brake (1) is stored in the control unit (50), and the control unit (50) compensates the brake hysteresis when generating a control signal to the wear adjustment device (7) and/or the pressure device (10).

22. The friction brake according to any one of the claims 1 to 21, **characterized in that** on both sides of the friction surface, a friction lining (5a, 5b) is arranged, and a pressure device (10) is provided on both sides.

23. The friction brake according to claim 22, **characterized in that** one of the two pressure devices (10) is arranged on a wear adjustment device (7).

24. A use of the friction brake according to any one of the claims 1 to 23 as a friction coupling, wherein the friction lining (5) is a first coupling disk (62) or part of a first coupling disk (62) and the friction surface is a second coupling disk, and the pressure device (10) presses the first coupling disk (62) against the second coupling disk (63).

25. The use according to claim 24, **characterized in that** the pressure device (10) is arranged on a wear adjustment device (7).

26. The use according to claim 24 or claim 25, **characterized in that** the pressure device (10) and, if necessary, the wear adjustment device (7) are arranged stationary.

27. The use according to claim 24 or claim 25, **characterized in that** the pressure device (10) and, if necessary, the wear adjustment device (7) are arranged such that they rotate together with the first coupling disk (62).

## Revendications

1. Frein à friction comportant un élément de frein, de préférence un étrier de frein (4) sur lequel est agencé un dispositif de serrage (10) destiné à serrer une garniture de friction (5) contre une surface de friction, de préférence contre un disque de frein (3), où sur le dispositif de serrage (10) sont montés un élément de fixation (13) auquel la garniture de friction (5) est adjacente et, par ailleurs, un élément d'actionnement (20), l'élément d'actionnement (20) est monté de façon rotative sur l'élément de frein, et l'élément d'actionnement (20) est attaqué par un moyen d'actionnement (14) servant à faire pivoter l'élément d'actionnement (20), **caractérisé par le fait qu'**un tourillon (25) est monté sur l'élément d'actionnement (30) et le tourillon (25) est monté de façon rotative dans l'élément de fixation (13), l'axe de rotation (27) du tourillon (25) étant disposé excentriquement par rapport à l'axe de rotation (24) de l'élément d'actionnement (20).

2. Frein à friction selon la revendication 1, **caractérisé par le fait qu'**il comporte en tant qu'élément d'actionnement (20), un tronçon d'arbre (23) à l'extrémité axiale duquel le tourillon (25) est placé.

3. Frein à friction selon la revendication 1, **caractérisé par le fait qu'**il comporte un arbre creux en tant qu'élément d'actionnement (20), la cavité axiale traversante (29) étant disposée excentriquement par rapport à l'axe de rotation (24) de l'arbre creux et le tourillon (25) étant emboîté dans la cavité (29).

4. Frein à friction selon la revendication 1, **caractérisé par le fait qu'**il comprend un arbre creux en tant qu'élément d'actionnement (20), la cavité axiale traversante (30) présentant une section non circulaire et le tourillon (25) étant emboîté dans la cavité (30).

5. Frein à friction selon l'une des revendications 1 à 4, **caractérisé par le fait que** la garniture de friction (5) est fixée rigidement à l'élément de fixation (13).

6. Frein à friction selon l'une des revendications 1 à 5, **caractérisé par le fait que** l'axe de rotation (25) du tourillon (25) est disposé dans une position de sortie de telle sorte que, sous l'effet de l'excentricité (E) en distance et en angle de l'élément d'actionnement (20) par rapport à l'axe de rotation (24), qui s'établit sous cet effet, il se produit un auto-affaiblissement au début du mouvement de serrage de la garniture de frein et/ou un auto-renforcement à la fin du mouvement de serrage.

7. Frein à friction selon l'une des revendications 1 à 6, **caractérisé par le fait que**, sur l'élément d'actionnement (20), est disposé un élément formant levier (22) qui est attaqué par le moyen d'actionnement (14).

8. Frein à friction selon l'une des revendications 1 à 7, **caractérisé par le fait que** sur l'élément de frein est monté un dispositif de rattrapage d'usure (7) et le dispositif de serrage (10) est monté sur le dispositif de rattrapage d'usure (7).

9. Frein à friction selon la revendication 8, **caractérisé par le fait que**, sur le dispositif de rattrapage d'usure (7), est monté un entraînement de rattrapage d'usure (8) qui entraîne une vis (9) sur laquelle est disposée une douille filetée (17) qui est montée dans un élément de rattrapage d'usure (11) et le dispositif de serrage (10) est monté sur l'élément de rattrapage d'usure (11).

10. Frein à friction selon la revendication 8, **caractérisé par le fait que**, sur le dispositif de rattrapage d'usure (7) est monté un dispositif de rétablissement du jeu (40) qui rétablit un jeu après un freinage.

11. Frein à friction selon la revendication 10, **caractérisé par le fait que**, sur l'élément mobile du dispositif de rattrapage d'usure (7), de préférence sur l'élément de rattrapage d'usure (11), est formée une cavité (41) dans laquelle est disposé un doigt (43), et ce doigt (43) est poussé élastiquement par un ressort (42) contre un élément fixe du frein à friction (1), de préférence contre un élément de palier de roue (2), le doigt (43) étant logé dans la cavité (41) avec du jeu latéral.

12. Frein à friction selon l'une des revendications 1 à 11, **caractérisé par le fait que** sur le dispositif de serrage (10) est montée une réserve de course pour rétracter l'élément de fixation (13) au-delà d'une position de base.

13. Frein à friction selon l'une des revendications 8 à 11, **caractérisé par le fait que** le dispositif de rattrapage d'usure (7) est réalisé avec une réserve de puissance afin de surmonter les forces de serrage qui subsistent après un freinage.

14. Frein à friction selon l'une des revendications 8 à 13, **caractérisé par le fait qu'**il comporte une unité de commande (50) qui est connectée par un câblage (53) à un capteur (51, 52) disposé sur un élément du frein à friction (1) et qui reçoit de ce dernier des valeurs mesurées, les valeurs mesurées sont traitées pour former un signal de commande et l'unité de commande (50) est connectée par un câblage (54) au dispositif de rattrapage d'usure (7) et/ou au dispositif de serrage (10) et commande ce ou ces dispositifs.

15. Frein à friction selon la revendication 14, **caractérisé par le fait que**, sur la base des valeurs mesurées, d'autres valeurs peuvent être obtenues dans l'unité de commande (50) et traitées pour former un signal de commande.

16. Frein à friction selon l'une des revendications 14 ou 15, **caractérisé par le fait que**, dans l'unité de commande (50), l'aptitude au fonctionnement du frein à friction (1) peut être contrôlée par mesure de grandeurs électriques ou par des comparaisons de valeurs mesurées ou encore par comparaison de valeurs mesurées à des valeurs mémorisées.

17. Frein à friction selon la revendication 16, **caractérisé par le fait qu'**en cas de défaut pour un freinage, l'unité de commande (50) commande uniquement le dispositif de rattrapage d'usure (17) ou uniquement le dispositif de serrage (10).

18. Frein à friction selon l'une des revendications 14 à 17, **caractérisé par le fait qu'**il comporte pour la redondance un câblage (53, 54), un capteur (51, 52), un actionneur, une unité de commande (50), une unité électrique et/ou une unité électronique du frein à friction (1).

19. Frein à friction selon l'une des revendications 14 à 18, **caractérisé par le fait que** l'unité de commande (50) commande le dispositif de rattrapage d'usure (7) et/ou le dispositif de serrage (10) pour réaliser une fonction de frein de stationnement ou une aide au démarrage.

20. Frein à friction selon l'une des revendications 1 à 19, **caractérisé par le fait que**, pour réaliser les opérations d'actionnement ou de mise en marche souhaitées, l'unité de commande (50) détermine une spécification de course pour le dispositif de rattrapage d'usure (7) et/ou pour le dispositif de serrage (10) et envoie le signal de commande de la spécification de course au dispositif de rattrapage d'usure (7) et/ou au dispositif de serrage (10).

21. Frein à friction selon l'une des revendications 1 à 19, **caractérisé par le fait que**, pour le frein à friction (1), l'hystérésis de freinage est mémorisée dans l'unité de commande (50) et l'unité de commande (50) compense l'hystérésis de freinage lors de la production d'un signal de commande envoyé au dispositif de rattrapage d'usure (7) et/ou au dispositif de serrage (10).

22. Frein à friction selon l'une des revendications 1 à 21, **caractérisé par le fait qu'**une garniture de friction (5a, 5b) est disposée de chaque côté de la surface de friction et qu'un dispositif de serrage (10) est monté de chaque côté.

23. Frein à friction selon la revendication 22, **caractérisé par le fait qu'**un des deux dispositifs de serrage (10) est disposé sur un dispositif de rattrapage d'usure (7).

24. Utilisation du frein à friction selon l'une des revendications 1 à 23 en tant qu'embrayage à friction, la garniture de friction (5) étant un premier disque d'embrayage (62) ou un élément d'un premier disque d'embrayage (62), et la surface de friction, un second disque d'embrayage (63), et le dispositif de serrage (10) presse le premier disque d'embrayage (62) contre le second disque d'embrayage (63).

25. Utilisation selon la revendication 4, **caractérisée par le fait que** le dispositif de serrage est disposé sur un dispositif de rattrapage d'usure (7).

26. Utilisation selon l'une des revendications 24 ou 25, **caractérisée par le fait que** le dispositif de serrage (10) et éventuellement le dispositif de rattrapage d'usure (7) sont disposés en position fixe.

27. Utilisation selon l'une des revendications 24 ou 25, **caractérisée par le fait que** le dispositif de serrage (10) et éventuellement le dispositif de rattrapage d'usure (7) sont montés pour tourner avec le premier disque d'embrayage (62).
